# EUROPEAN PATENT SPECIFICATION

(11) **EP 1 995 558 B1**
(45) Date of publication and mention of the grant of the patent: **10.07.2013**
(21) Application number: 07737791.9
(22) Date of filing: 05.03.2007
(51) Int. Cl.: G01C 21/36, G01C 21/32, G09B 29/10

(54) **POSITION REGISTRATION DEVICE, ROUTE SEARCH DEVICE, POSITION REGISTRATION METHOD, POSITION REGISTRATION PROGRAM, AND RECORDING MEDIUM**
POSITIONSERFASSUNGSVORRICHTUNG, ROUTENSUCHVORRICHTUNG, POSITIONSERFASSUNGSVERFAHREN, POSITIONSERFASSUNGSPROGRAMM UND AUFZEICHNUNGSMEDIUM
DISPOSITIF D'ENREGISTREMENT DE POSITION, DISPOSITIF DE RECHERCHE D'ITINÉRAIRE, PROCÉDÉ D'ENREGISTREMENT DE POSITION, PROGRAMME D'ENREGISTREMENT DE POSITION, ET SUPPORT D'ENREGISTREMENT ASSOCIÉ

(30) Priority: 14.03.2006 JP 2006069877
(43) Date of publication of application: 26.11.2008
(73) Proprietor: Pioneer Corporation, Kanagawa 212-0031 (JP)
(72) Inventor: SAKATA, Daisuke, Kawagoe-shi, Saitama 350-8555 (JP)
(74) Representative: Haley, Stephen
(86) International application number: PCT/JP2007/054216
(87) International publication number: WO 2007/105519

(56) References cited:
- JP-A- 09 280 881
- JP-A- 11 023 302
- JP-A- 11 023 302
- JP-A- 2005 037 275
- JP-A- 2005 337 837

## Description

### TECHNICAL FIELD

The present invention relates to a position registering apparatus, a route retrieving apparatus, a position registering method, a position registering program, and a recording medium capable of automatically recording and correlating a parking position and a feature located in the vicinity of a parking position.

### BACKGROUND ART

Conventionally, an information providing apparatus has been provided that includes a current position calculating unit calculating a current position of a vehicle; a parking lot information acquiring unit acquiring parking lot information from the current position calculated by the current position calculating unit and parking lot locating data read from a map data storage unit; a route retrieving unit conducting route retrieval taking into account entrances and exits based on the information from the parking lot information acquiring unit and the map data storage unit; the map data storage unit storing map data and parking lot data; a display controlling unit conducting control for displaying a result of route retrieval taking into account entrances and exits retrieved by the route retrieving unit; and a displaying unit controlled by the display controlling unit and displaying the result of route retrieval taking into account entrances and exits, where the information providing apparatus can provide effective information taking into account entrances and exits of facilities such as parking lots (see, e.g., Patent Document 1).

Patent Document 1: Japanese Patent Application Laid-Open Publication No. 2004-12425

### DISCLOSURE OF INVENTION

### PROBLEM TO BE SOLVED BY THE INVENTION

However, in the case of the information providing apparatus of the conventional art described in Patent Document 1, if the route retrieving unit retrieves a route to a parking lot when an entrance point to the parking lot is not recorded in the map information, the parking lot information. etc., only a route to the vicinity of the parking lot can be retrieved. Therefore, even if one can somehow arrive at the vicinity of the parking lot, it is problematic in that an entrance of the parking lot can not immediately be identified and that the entrance of the parking lot must be searched for after arrival, posing a significant inconvenience, for example.

Although it is conceivable to preliminarily record entrance points of parking lots for all the parking lots included in map information, parking lot information, etc., it is problematic in that data edit operations, etc., become very difficult due to an increase in the amount of recorded data, resulting in increased product cost, for example.

Although it is conceivable that entrance points and exit points are embedded in map information, parking lot information, etc., through operation and input by a user for parking lots utilized by the user, it is problematic in that associated input operations are troublesome for the user and improved convenience cannot be expected, for example.
Japanese Patent Application JP11023302 describes a system in which details relating to a destination are updated in accordance with previous driver behaviour.

### MEANS FOR SOLVING PROBLEM

To solve the problems above and achieve an object, a position registering apparatus according to a first aspect of the invention includes an acquiring unit adapted to acquire traveling state information indicative of a traveling state of a mobile object; a position identifying unit adapted to identify a position of the mobile object based on the traveling state information and map information; a saving unit adapted to temporarily save a deviation point from a road when the position of the mobile object identified to be on a road is then identified to be at a place other than a road; a parking determining unit adapted to determine, while the position of the mobile object is identified to be at the place other than a road, whether the mobile object is parked; a retrieving unit adapted to retrieve a feature existing in a vicinity of a parking position when it is determined that the mobile object is parked, the parking position being a position where the mobile object is parked; and a registering unit adapted to, when a feature existing in the vicinity of the parking position is retrieved after the current position of the mobile object is identified to be at the place other than a road, register into a storage unit, the deviation point as an entrance point of a parking lot of the feature.

A route retrieving apparatus according to a second aspect of the invention includes, the position registering apparatus according to the first aspect; a destination setting unit adapted to set a destination; and a route retrieving unit adapted to, when a feature for which an entrance point of a parking lot has been stored in the storage unit is set as the destination, retrieve a route to the entrance point.

A route retrieving apparatus according to a third aspect of the invention includes the position registering apparatus according to the first aspect; a destination setting unit adapted to set a destination; and a route retrieving unit adapted to retrieve a route to the destination, where the route retrieving unit, when the current position of the mobile object is identified to be at a place other than a road within a predetermined range of a feature for which an exit point is registered and a destination is set, is adapted to retrieve a route from the exit point to the destination.

A position registering method according to a fourth aspect of the invention includes an acquiring step of acquiring traveling state information indicative of a traveling state of a mobile object; a position identifying step of identifying a position of the mobile object based on the traveling state information and map information; a saving step of temporarily saving a deviation point from a road when the position of the mobile object identified to be on a road is then identified to be at a place other than a road; a parking determining step of determining, while the position of the mobile object is identified to be at the place other than a road, whether the mobile object is parked; a retrieving step of retrieving a feature existing in a vicinity of a parking position when it is determined that the mobile object is parked; and a registering step of registering into a storage unit, when a feature existing in the vicinity of the parking position is retrieved, the deviation point as an entrance point of a parking lot of the feature.

A position-registering computer program according to a fifth aspect of the invention causes a computer to execute the position registering method according to the fourth aspect.

A computer-readable recording medium according to a sixth aspect of the invention stores therein the position-registering computer program according to the fifth aspect.

### BRIEF DESCRIPTION OF DRAWINGS

Fig. 1 is a block diagram of a functional configuration of a position registering apparatus according to an embodiment;
Fig. 2 is a flowchart of an example of a process of the position registering apparatus according to the embodiment;
Fig. 3 is a block diagram of a functional configuration of a route retrieving apparatus according to the embodiment;
Fig. 4 is a block diagram of a hardware configuration of a navigation apparatus according to an example of the present invention;
Fig. 5 is a flowchart of an example of a position recording process procedure of the navigation apparatus according to the example of the present invention;
Fig. 6-1 is a view of an example of a case when a vehicle deviates from a road to enter a parking lot;
Fig. 6-2 is an explanatory view of a process when a deviation point is detected;
Fig. 7 is a flowchart of another example of the position recording process procedure of the navigation apparatus according to the example of the present invention;
Fig. 8-1 is a view of an example of a case when a vehicle exits from a parking lot of a feature onto a road; and
Fig. 8-2 is an explanatory view for explaining a process when a returning point is detected.

### EXPLANATIONS OF LETTERS OR NUMERALS

| | |
|---|---|
| 100 | position registering apparatus |
| 101 | acquiring unit |
| 102 | position identifying unit |
| 103 | saving unit |
| 104 | parking determining unit |
| 105 | retrieving unit |
| 106 | registering unit |

### BEST MODE(S) FOR CARRYING OUT THE INVENTION

A preferred embodiment is described hereinafter for a position registering apparatus, a route retrieving apparatus, a position registering method, a position registering program, and a recording medium according to the present invention with reference to the accompanying drawings.

### (Embodiment)

### (Functional Configuration of Position Registering Apparatus)

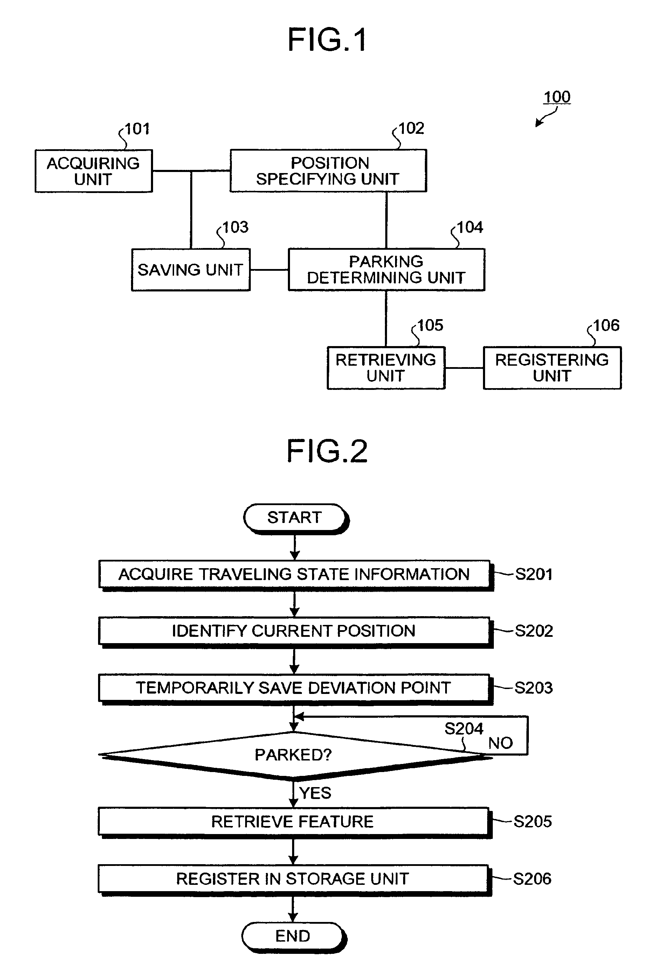

A functional configuration of a position registering apparatus according to the embodiment is described with reference to Fig. 1. Fig. 1 is a block diagram of a functional configuration of a position registering apparatus according to the embodiment. As shown in Fig. 1, a position registering apparatus 100 includes an acquiring unit 101, a position identifying unit 102, a saving unit 103, a parking determining unit 104, a retrieving unit 105, and a registering unit 106.

The acquiring unit 101 acquires traveling state information indicating the traveling state of a mobile object. The traveling state information is information including position information, velocity information, and traveling direction information concerning the mobile object, for example. The traveling state information is calculated with the use of signals received from GPS satellites by a GPS receiver mounted on the mobile object or values output from sensors disposed on the mobile object.

The position identifying unit 102 identifies the current position of the mobile object based on the traveling state information acquired by the acquiring unit 101 and map information. The map information is information such as road shape information consisting of nodes and links, and image data drawn with the use of features related to facilities, roads, and other geographic features (mountains, rivers, land).

For example, the position identifying unit 102 identifies the current position of the mobile object on a road by executing a map matching process to correct an estimated current position, which is the current position of the mobile object calculated from signals received from GPS satellites and output values of various sensors, or identifies the estimated current position directly as the current position of the mobile object at a place other than on a road.

The map matching process is a process of comparing the road shape data with position information, a traveling direction, a traveling distance, etc., of the mobile object to correct the position of the mobile object on a road if it is determined the mobile object is moving on the road.

If the current position of the mobile object identified to be on a road is identified to be at a place other than a road, the saving unit 103 temporarily saves a deviation point from the road as an entrance point to a parking lot of the destination. The deviation point is the last current position of the mobile object identified to be on the road by the position identifying unit 102 when the mobile object deviates from the road to a place other than the road.

The parking determining unit 104 determines whether the mobile object is parked when the current position of the mobile object is identified to be at a place other than a road. Parking as used herein means a state in which the current position of the mobile object does not change (e.g., for five minutes). With regard to the determination of whether the mobile object is parked, the parking determining unit 104 determines that the mobile object is parked if, from the traveling state information, it is detected that the current position of the mobile object does not change from a place not on a road for a predetermined time.

If it is determined that the mobile object is parked, the retrieving unit 105 retrieves a feature existing in the vicinity of the parking position. The feature is an object likely to have a parking lot in the vicinity thereof and is among natural or artificial terrestrial objects and may be a facility such as a residence, a store, a building, or a factory, or a tree well-known as a tourist spot, for example. The parking position is the current position of the mobile object identified by the position identifying unit 120 when it is determined that the mobile object is parked.

Further, if it is determined that the mobile object is parked, the retrieving unit 105 retrieves a feature that is of a given category and existing in the vicinity of the parking position. A category is a classification according to the type of feature and, for example, if the feature is a facility, the category may be a classification according to facility size (e.g., a large facility, a small facility, etc.) or may be a classification according to facility genre (e.g., a restaurant, a medical facility, etc.).

The retrieving unit 105 retrieves a feature that is of a first category and existing within a first predetermined range from the parking position, and if a feature of the first category cannot be retrieved, the retrieving unit 105 retrieves a feature that is of a second category and existing within a second predetermined range that is greater than the first predetermined range. The predetermined range may be set preliminarily for each category. Alternatively, a user may operate an operating unit not shown to set the predetermined range for each category. The predetermined range may be a direct distance or a distance along a road from the parking position.

Specifically, for example, if a small facility such as a convenience store is search for, a smaller predetermined range is set (e.g., a range encompassing a circular area with a radius of approximately 100 m centering on the parking position of the mobile object), and if a large facility such as a department store is searched for, a wider predetermined range is set (e.g., a range encompassing a circular area with a radius of approximately 1 km centering on the parking position of the mobile object). In this case, the retrieving unit 105 retrieves a convenience store existing within the first predetermined range, i.e., the smaller predetermined range. If a convenience store cannot be retrieved, a department store is retrieved that exists within the second predetermined range, which is wider than the first predetermined range.

After the current position of the mobile object identified to be on a road is then identified to be at a place other than a road, if a feature existing in the vicinity of the parking position is retrieved, the registering unit 106 registers, into the storage unit not shown, the deviation point saved by the saving unit 103 as an entrance point of the parking lot of the retrieved feature.

If plural features are retrieved by the retrieving unit 105, the registering unit 106 registers, into the storage unit not shown, the deviation point as an entrance point of the parking lot of the feature closest to the parking position. For example, when searching for a convenience store existing within a range encompassing a circular area with a radius of approximately 100 m centering on the parking position, if plural convenience stores are retrieved, the deviation point saved by the saving unit 103 is registered as an entrance point of the parking lot of the convenience store closest to the parking position.

After registering the entrance point of the parking lot of the retrieved feature, if the current position of the mobile object identified to be at a place other than a road is then identified to be on a road by the position identifying unit 102, the registering unit 106 registers, into the storage unit not shown, a returning point onto the road as an exit point of the parking lot of the retrieved feature. The returning point is the first current position of the mobile object identified to be on a road by the position identifying unit 102 when the mobile object returns onto a road from a place other than a road.

### (Details of Process of Position Registering Apparatus)

Details of the process of the position registering apparatus according to the present invention are described. Fig. 2 is a flowchart of an example of the process of the position registering apparatus according to the embodiment. As shown in the flowchart of Fig. 2, in the position registering apparatus 100, the acquiring unit 101 acquires traveling state information indicating a traveling state of the mobile object (step S201). The traveling state information acquired by the acquiring unit 101 is information including position information, velocity information, traveling direction information, etc., of the mobile object.

The position identifying unit 102 identifies the current position of the mobile object, based on the traveling state information acquired by the acquiring unit 101 and map information (step S202). The current position of the mobile object identified by the position identifying unit 102 may be, for example, the estimated current position calculated from signals received from GPS satellites and values output from various sensors or the current position obtained by correcting the estimated current position with the map matching process.

If the current position of the mobile object identified to be on a road is then identified to be at a place other than a road, the saving unit 103 temporarily saves the deviation point from the road (step S203). The deviation point temporarily saved by the saving unit 103 is the last current position of the mobile object identified to be on the road by the position identifying unit 102 when the mobile object deviates from the road to a place other than the road.

The temporarily saved deviation point is temporarily saved to be utilized in a process executed by the registering unit 106 described later and is information automatically erased after utilization in the process of the registering unit 106.

If the current position of the mobile object is identified to be at a place other than the road, the parking determining unit 104 determines whether the mobile object is parked (step S204). For example, the traveling state information acquired by the acquiring unit 101 and the map information are used to determine whether the mobile object is parked. Specifically, for example, when the current position of the mobile object is identified to be at a place other than a road, if the current position of the mobile object does not change for five minutes, it is determined that the mobile object is parked.

After waiting for the mobile object to be parked, if it is determined that the mobile object is parked (step S204: YES), the retrieving unit 105 retrieves a feature existing in the vicinity of the parking position (step S205). The feature retrieved by the retrieving unit 105 is an object likely to have a parking lot in the vicinity thereof and is among natural or artificial terrestrial objects and may be a facility such as a residence, a store, a building, or a factory, or a tree well known as a tourist spot, for example.

If a feature existing in the vicinity of the parking position is retrieved, the registering unit 106 registers, into the storage unit not shown, the deviation point as an entrance point of the parking lot of the retrieved feature (step S206), and a sequence of the process of the flowchart is terminated. The deviation point temporarily saved by the saving unit 103 at step S203 may be automatically erased at this point.

If no feature is retrieved by the retrieving unit 105 at step S205, a search range may be changed to search for a feature again. For example, if no convenience store is retrieved that exists within a range encompassing a circular area with a radius of approximately 100 m centering on the parking position, a convenience store may be searched for again that exists within a range encompassing a circular area with a radius of approximately 300 m centering on the parking position. Alternatively, if no convenience store is retrieved that exists within a range encompassing a circular area with a radius of approximately 100 m centering on the parking position, a department store may be retrieved that exists within a range encompassing a circular area with a radius of approximately 1 km centering on the parking position.

### (Functional Configuration of Route retrieving apparatus)

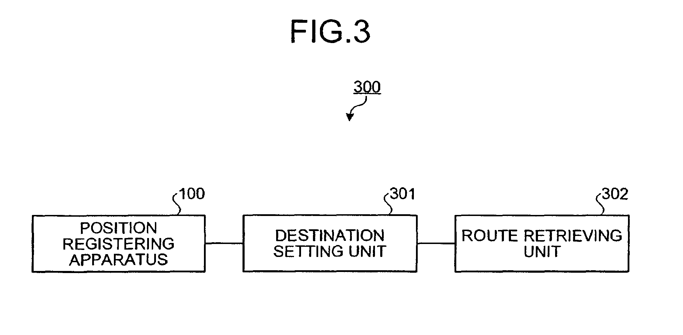

A functional configuration of a route retrieving apparatus according to the embodiment is described with reference to Fig. 3. Fig. 3 is a block diagram of a functional configuration of a route retrieving apparatus according to the embodiment. In Fig. 3, a route retrieving apparatus 300 includes the position registering apparatus 100, a destination setting unit 301, and a route retrieving unit 302.

After the current position of the mobile object identified to be on a road is then identified to be at a place other than a road as described above, if a feature existing in the vicinity of the parking position is searched for and a feature is retrieved, the position registering apparatus 100 registers the deviation point from the road as an entrance point of the parking lot of the retrieved feature.

After registering the entrance point of the parking lot of the retrieved feature, if the current position of the mobile object identified to be at a place other than a road is then identified to be on a road, the position registering apparatus 100 registers the returning point onto the road as an exit point of the parking lot of the retrieved feature.

The destination setting unit 301 sets a destination. At this point, a feature for which an entrance point to a parking lot has been registered by the registering unit 106 (see Fig. 1) can be set as the destination. Specifically, for example, a user may operate the operating unit to input the name of a place or the address of the feature having the registered entrance point or may plot, on a map displayed on a displaying unit not shown, and set, as the destination, the feature for which an entrance point to a parking lot has been registered. The destination is not limited to a final destination that a user wants to ultimately arrive at but also may be a via-point passed through on the way.

If the feature for which an entrance point to a parking lot has been registered is set as the destination by the destination setting unit 301, the route retrieving unit 302 retrieves a route to the feature for which the entrance point to a parking lot has been registered. When the current position of the mobile object is identified to be within the parking lot of the feature (at a place other than a road and within a predetermined range from the feature) for which an exit point has been registered, if an arbitrary destination is set by the destination setting unit 301, the route retrieving unit 302 retrieves a route to the destination taking into account the exit point of the parking lot.

As described above, according to the embodiment, after the current position of the mobile object identified to be on a road is then identified to be at a place other than a road, if a feature existing in the vicinity of the parking position is searched for and a feature is retrieved, the deviation point from the road can automatically be registered as an entrance point of the parking lot of the retrieved feature.

After registering the entrance point of the parking lot of the retrieved feature, if the current position of the mobile object identified to be at a place other than a road is then identified to be on a road, the position registering apparatus 100 can automatically register the returning point onto the road as an exit point of the parking lot of the retrieved feature.

As described above, for a feature existing in the vicinity of the parking position of the mobile object, the position registering apparatus 100 can automatically register, respectively, the deviation point from a road and the returning point onto a road as an entrance point and an exit point of a parking lot of the feature.

When a feature is set as a destination, if an entrance point of a parking lot of the feature is registered by the position registering apparatus 100, the route retrieving apparatus 300 can retrieve a more appropriate route by retrieving a route to the entrance point of the parking lot.

When the current position of the mobile object is identified to be within a parking lot of a feature for which an exit point of a parking lot has been registered by the position registering apparatus 100, if an arbitrary destination is set by the destination setting unit 103, the route retrieving apparatus 300 can retrieve a more appropriate route by retrieving a route to the destination taking into account the exit point of the parking lot.

An example according to the embodiment of the present invention is described in detail. The description is made by exemplarily illustrating a case where the position registering apparatus according to the embodiment is applied to a navigation apparatus mounted on a vehicle (including four-wheel vehicles and two-wheel vehicles) to record an entrance point/exit point of a parking lot. Example

### (Hardware Configuration of Navigation Apparatus)

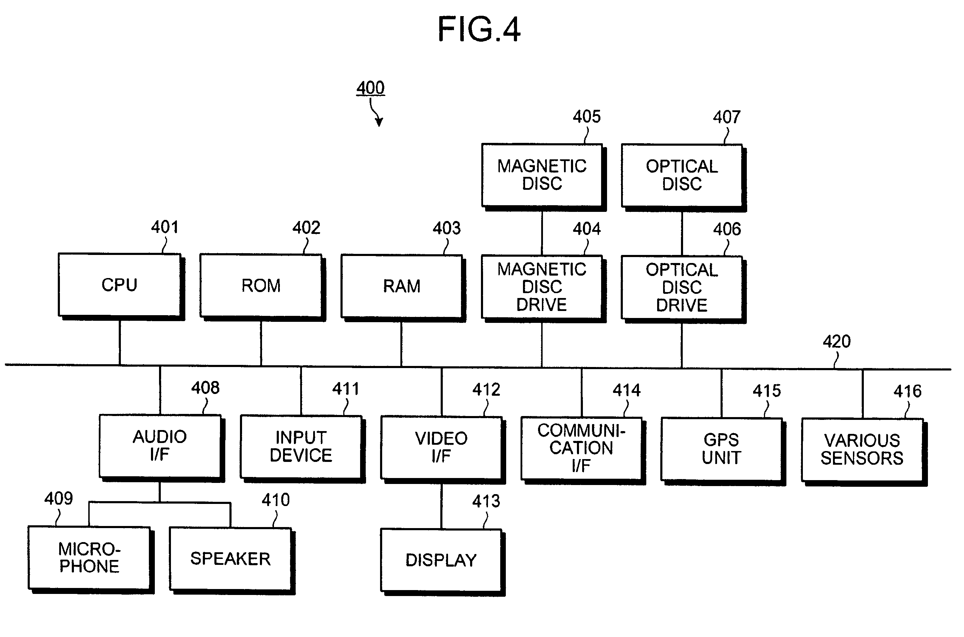

A hardware configuration is described for a navigation apparatus 400 according to an example of the present invention. Fig. 4 is a block diagram of a hardware configuration of a navigation apparatus according to the example of the present invention. As shown Fig. 4, the navigation apparatus 400 includes, respectively connected through a bus 420, a CPU 401, a ROM 402, a RAM 403, a magnetic disc drive 404, a magnetic disc 405, an optical disc drive 406, an optical disc 407, an audio I/F (interface) 408, a microphone 409, a speaker 410, an input device 411, a video I/F 412, a display 413, a communication I/F (interface) 414, a GPS unit 415, and various sensors 416.

The CPU 401 governs overall control of the navigation apparatus 400. The ROM 402 stores therein various programs such as a boot program, a current-position calculating program, a current-position identifying program, a route retrieval program, a route guidance program, a sound generating program, a map-information display program, a communication program, a database generating program, a data analysis program, and a position recording program.

The current-position calculating program causes the current position of the vehicle (the current position of the navigation apparatus 400) to be calculated based on output information concerning the GPS unit and the various sensors 416 described later.

The current-position identifying program causes the current position of the vehicle to be identified to be on a road or at a place other than a road based on the current position (estimated current position) calculated by executing the current-position calculating program and the road shape data of the map information recorded on the magnetic disc 405 described later.

The route retrieval program causes the optimum route from a start point to a destination to be retrieved with the use of the map information, etc., recorded on the magnetic disc 405 described later. The optimum route is the shortest (or fastest) route to the destination or a route most satisfying a condition specified by a user. A guide route retrieved by executing the route retrieval program is output to the audio I/F 408 or the video I/F 412 though the CPU 401, for example.

The route guidance program causes route guidance information to be generated in real time based on guide route information retrieved by executing the route retrieval program, position information indicating the current position of the vehicle identified by executing the current-position identifying program, and the map information recorded on the magnetic disc 405 described later. The route guidance information generated by executing the route guidance program is output to the audio I/F 408 or the video I/F 412 though the CPU 401, for example.

The sound generating program causes information to be generated for tones and sounds corresponding to sound patterns. That is, audio guidance information corresponding to guidance points is caused to be generated based on the route guidance information generated by executing the route guidance program. The generated audio guidance information is output to the audio I/F 408 though the CPU 401, for example.

The map-information display program causes a display format of the map information that is displayed on the display 413 by the video I/F 412 to be determined and causes the map information to be displayed on the display 413 in the determined format.

The position recording program causes the entrance point or the exit point from the parking lot to be recognized with the use of the current position identified by the current-position identifying program and the map information recorded on the magnetic disc 405 described later. The recognized entrance point or exit point from the parking lot is caused to be recorded in a recording medium such as the magnetic disc 405 and the optical disc 407 described later or a memory not shown.

The RAM 403 is used as a work area of the CPU 401, for example.

The magnetic disc drive 404 controls the reading/writing of data from/to the magnetic disc 405 under the control of the CPU 401. The magnetic disc 405 stores thereon the data written under the control of the magnetic disc drive 404. The magnetic disc 405 may be an HD (hard disc) or an FD (flexible disc), for example.

An example of information recorded on the magnetic disc 405 includes map information used for route retrieval/route guidance. The map information includes background data representing features such as buildings, rivers, and ground surfaces, and road shape data representing shapes of roads. The map information is depicted two-dimensionally or three-dimensionally on the display 413. During the route guidance by the navigation apparatus 400, the map information and a vehicle mark are superimposed and displayed to indicate the current position of the vehicle.

The road shape data also includes traffic condition data. The traffic condition data includes, for example, information concerning the presence of a traffic light, a crosswalk, entrances/exits and junctions of expressways for nodes, and lengths (distances) of links, road widths, direction of travel, road types (such as expressway, toll road, general road), etc., for links.

Among the traffic condition data, information concerning past traffic congestion is stored as past traffic congestion information after statistical processing based on season, day of the week, long holiday seasons, the time of day, etc. Although the navigation apparatus 400 acquires, for example, information concerning current traffic congestion from road traffic information received by the communication I/F 414 described later, the past traffic congestion information can be used to forecast congestion at a specified time of day, for example.

Although the map information is recorded on the magnetic disc 405 in this example, the map information may be recorded on the optical disc 407 described later. The map information is not limited to being recorded in the constituent units integrally provided among the hardware of the navigation apparatus 400 and may be provided externally from the navigation apparatus 400. In this case, the navigation apparatus 400 may acquire the map information through the communication I/F 414 via a network. The map information acquired in this way is stored in the RAM 403, for example.

The optical disc drive 406 controls the reading/writing of data from/to the optical disc 407 under the control of the CPU 401. The optical disc 407 is a removable recording medium and data is read from the optical disc 407 under the control of the optical disc drive 406. A writable recording medium can be utilized for the optical disc 407. The removable recording medium can be a medium other than the optical disc 407, such as an MO and a memory card.

The audio I/F 408 is connected to the microphone 409 for audio input and the speaker 410 for audio output. Sounds received by the microphone 409 are A/D-converted within the audio I/F 408. The speaker 410 may be disposed not only on the inside of the vehicle but also on the outside of the vehicle. The speaker 410 outputs sounds based on audio signals from the audio I/F 408. The sounds input from the microphone 409 can be recorded as audio data on a recording medium such as the magnetic disc 405, the optical disc 407, or on a memory not shown.

The input device 411 includes a remote controller including keys for entering characters, numeric values, and various instructions, a keyboard, a mouse, a touch panel, etc.

The video I/F 412 is connected to the display 413. Specifically, the video I/F 412 includes, for example, a graphic controller that generally controls the display 413, a buffer memory such as VRAM (Video RAM) that temporarily stores immediately displayable image information, and a control IC that controls the display 413 based on image data output from the graphic controller.

The display 413 displays icons, cursors, menus, windows, or various data such as text and images. For example, a CRT, a TFT liquid crystal display, a plasma display, etc., can be employed as the display 413.

The communication I/F 414 is wirelessly connected to a network and functions as an interface between the navigation apparatus 400 and the CPU 401. Further, the communication I/F 414 is wirelessly connected to a communication network such as the internet and functions as an interface between the CPU 401 and the communication network.

The network includes a LAN, a WAN, a public line network, a portable telephone network, etc. Specifically, the communication I/F 414 includes, for example, an FM tuner, a VICS (Vehicle Information and Communication System: registered trademark)/beacon receiver, a radio navigation apparatus, and other navigation devices, and acquires the road traffic information, concerning for example congestion and traffic regulations, distributed from VICS centers.

The GPS unit 415 receives signals from GPS satellites and outputs information indicating the current position of the vehicle. The information output by the GPS unit 415 is used along with output values of the various sensors 416 described later when the CPU 401 calculates the current position (estimated current position) of the vehicle. The information indicating the current position is information identifying one point on the map information, for example, latitude/longitude and altitude.

The various sensors 416, including a vehicle speed sensor, an acceleration sensor, and an angular speed sensor, output information that can be used to determine the position and behavior of the vehicle. The values output by the various sensors 416 are used by the CPU 401 for calculating the current position (estimated current position) of the vehicle and measuring variations in velocity and direction.

The various sensors 416 include a sensor that detects vehicle operations by a driver. The vehicle operations detected may include steering operations, input for turn signals, the opening/closing of vehicle doors, the turning on/off of the engine (or the on/off of ACC power source), etc.

Specifically, with regard to the functional constituent units of the position registering apparatus 100 according to the embodiment shown in Fig. 1, i.e., the acquiring unit 101, the position identifying unit 102, the parking determining unit 104, and the registering unit 106, the functions thereof are implemented by the CPU 401, the magnetic disc 405, the GPS unit 415, and the various sensors 416, for example. With regard to the functional constituent units of the route retrieving apparatus 300 according to the embodiment shown in Fig. 3, the function of the destination setting unit 301 is implemented by the input device, and the function of the route retrieving unit 302 is implemented by the CPU 401 executing the route retrieval program recorded on the ROM 402, etc.

### (Position Recording Process Procedure of Navigation Apparatus)

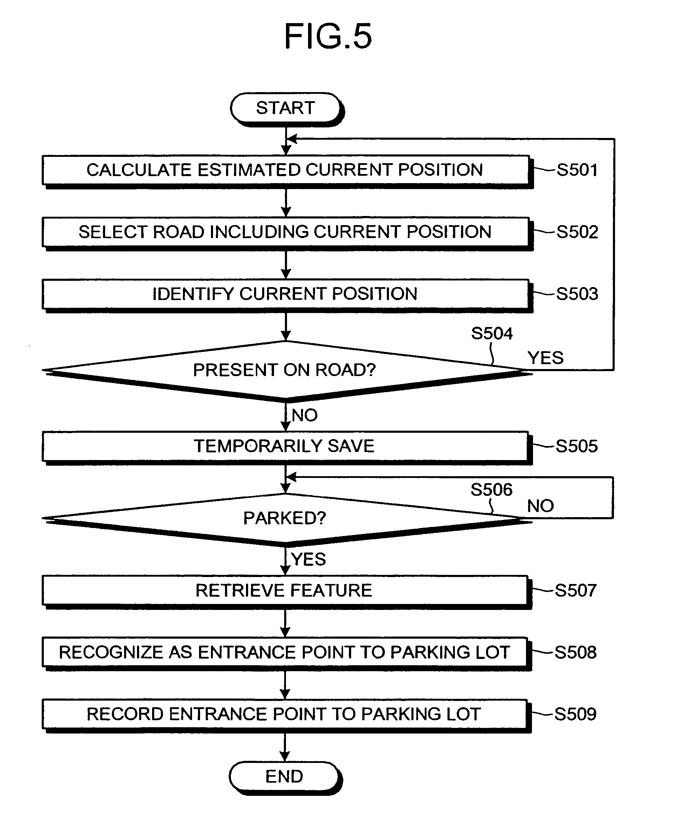

An example of a position recording process procedure of the navigation apparatus 400 according to the example of the present invention is described. Fig. 5 is a flowchart of an example of the position recording process procedure of the navigation apparatus according to the example of the present invention.

As shown in the flowchart of Fig. 5, the navigation apparatus 400 calculates the current position (estimated current position) of the vehicle based on information output from the GPS unit 415 and the various sensors 416 (step S501). The estimated current position is calculated based on, for example, the signals received from the GPS satellites providing position information indicative of the current position of the vehicle, vehicle speed information output from the vehicle speed sensor, and vehicle angular speed information (information concerning the amount of change in the direction of the vehicle) output from the angular speed sensor.

Based on the estimated current position of the vehicle calculated at step S501, a road including the current position of the vehicle is selected (step S502). For example, a road closest to the estimated current position is selected as a road including the current position of the vehicle. Alternatively, a direction of a road present within a predetermined range from the estimated current position (road direction) may be compared with the traveling direction of the vehicle to select a road including the current position of the vehicle. If it is determined that the vehicle is not traveling on a road, a selection is not made of a road including the current position of the vehicle.

The current position of the vehicle is identified based on the information concerning the estimated current position calculated at step S501 and the road shape data of the road selected at step S502. For example, if a road including the current position of the vehicle is selected at step S502, the map matching process is executed to identify a position on a road corrected by the map matching process as the current position of the vehicle. If a road including the current position of the vehicle is not selected at step S502, the estimated current position calculated at step S501 is identified as the current position of the vehicle.

It is determined whether the current position of the vehicle identified at step S503 is on a road (step S504). Specifically, if the current position of the vehicle identified at step S503 is a position corrected onto a road by the map matching process, it is determined that the current position of the vehicle is on a road. If the current position of the vehicle identified at step S503 is the estimated current position calculated at step S501, it is determined that the current position of the vehicle is not on a road.

At step S504, if it is determined that the current position of the mobile object is on a road (step S504: YES), the process returns to step S501 and repeats a sequence of the process.

If it is determined that the current position of the vehicle is not on a road at step S504 (step S504: NO), a deviation point where the vehicle has deviated from the road is temporarily saved in a memory, etc., not shown (step S505). The deviation point is the last current position of the vehicle identified to be on the road. Only the newest deviation point is saved temporarily.

It is determined whether the vehicle is parked at a place other than a road (step S506). With regard to the determination of whether the vehicle is parked, for example, operations on the vehicle by a driver may be detected by the various sensors 416, etc., to perform the determination based on the detection result. Specifically, for example, if it is determined that the current position of the vehicle is not on the road and the engine of the vehicle is then turned off (or the ACC power source is turned off), it is determined that the vehicle is parked.

Alternatively, a case in which the vehicle has not moved from the same point for a predetermined period or longer, or in which a driver applies the parking brake or changes a shift position to the parking position, it is determined that the vehicle is parked.

Waiting occurs for the vehicle to be parked and if it is determined that the vehicle is parked (step S506: YES), a feature that is of a given category and existing in the vicinity of the parking position is retrieved (step S507). The parking position is the current position of the vehicle when it is determined that the vehicle is parked. The feature may be a facility such as an amusement park, a department store, or a convenience store, or a park, or a tourist spot, for example.

A category is a classification according to the type of feature and may be, for example, a large facility such as an amusement park, an event site, and a department store or a small facility such as a restaurant, a book store, and a convenience store. A predetermined range for searching for the feature can be set depending on the category. For example, a predetermined range can be set larger if a large facility such as a department store is searched for, and a predetermined range can be set smaller if a small facility such as a convenience store is searched for.

Specifically, for example, the first predetermined range is set to a range encompassing a circular area with a radius of approximately 100 m centering on the parking position to search for a convenience store, and the second predetermined range is set to a range encompassing a circular area with a radius of approximately 1 km centering on the parking position to search for a department store. In this case, first, a convenience store existing within the first predetermined range is searched for. If no convenience store is retrieved, a department store existing within the second predetermined range is searched for.

Plural predetermined ranges may be set for the same category. For example, to search for a convenience store, the first predetermined range is set as a range encompassing a circular area with a radius of approximately 100 m centering on the parking position, and the second predetermined range is set as a range encompassing a circular area with a radius of approximately 300 m centering on the parking position. In this case, if no convenience store is retrieved within the first predetermined range, a convenience store within the second predetermined range is searched for.

If no feature is retrieved in the predetermined range set, a sequence of the process of the flowchart is terminated. Alternatively, the process may not be terminated at this point and a user may be prompted to change the predetermined range for the search or to change the category to be searched for. For example, a prompt of such an effect may be displayed on the display 413 and presented to a user, and the user may change the category or change the predetermined range through the input device 411.

The display 413 may indicate that nothing has been retrieved and a user may be prompted to select whether the sequence of the process is to be continued. If the user selects not to continue using the input device 411, a sequence of the process of the flowchart is terminated.

If a feature that is of the given category and existing in the vicinity of the parking position is retrieved at step S507, the deviation point temporarily saved at step S505 is recognized as an entrance point of the parking lot of the retrieved feature (step S508).

When the deviation point where the vehicle deviated from the road is detected, the deviation point may be detected with the use of traveling path information acquired by recording a traveling path of the vehicle. For example, if it is determined that the current position of the vehicle is not on a road, a traveling path of the vehicle before the determination may be traced back to detect the deviation point where the vehicle deviated from the road. A specific example of detecting the deviation point is briefly described here.

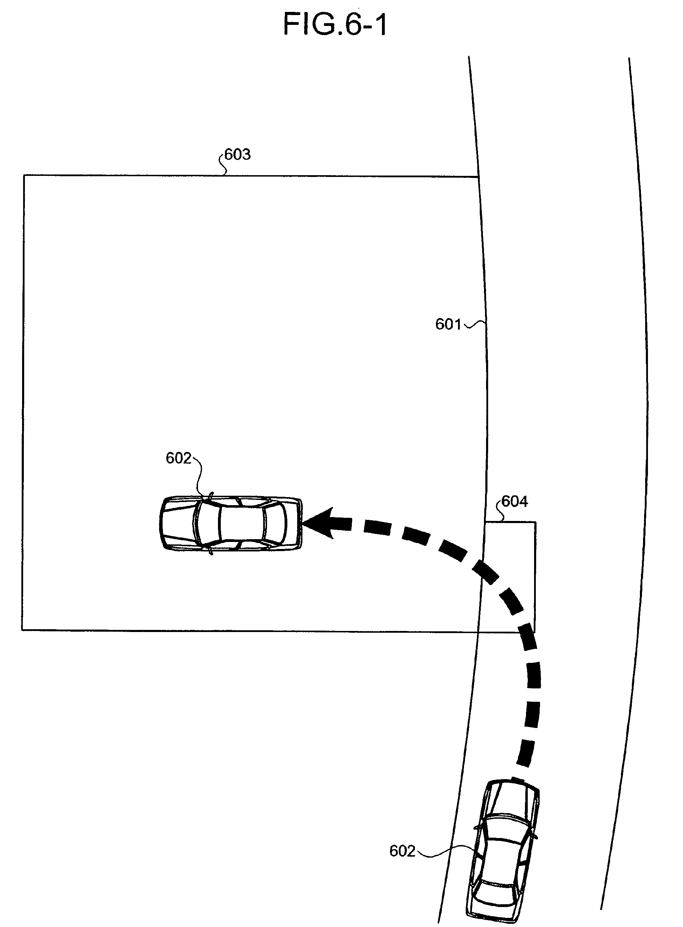

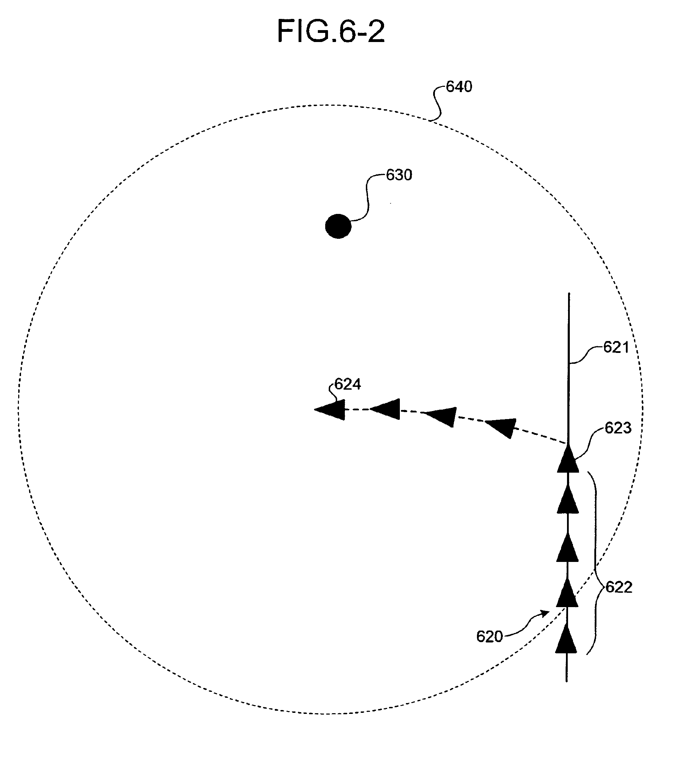

Fig. 6-1 is a view of an example of a case when a vehicle deviates from a road to enter a parking lot. Fig. 6-2 is an explanatory view of a process when the deviation point is detected. As shown in Fig. 6-1, a vehicle 602 traveling on a road 601 deviates from the road 602 and enters a parking lot 603 from an entrance 604 of the parking lot in this case.

A traveling path 620 of the vehicle 602 shown in Fig. 6-2 represents a traveling path of the vehicle until the vehicle 602 deviates from the road 601 and enters the parking lot 603. Points indicated on the traveling path 620 indicate the current positions of the vehicle 602 at respective times, e.g., predetermined time intervals.

The deviation point of the vehicle 602 from the road 601 is detected from the current positions of the vehicle 602 indicated on the traveling path 620. Specifically, for example, based on the position information concerning the points indicated on the traveling path 620 and a road link 621 of the road 601 included in the road shape data, a point 623 identified as the last current position of the vehicle is calculated from road points 622 on the road 601, and the point 623 is defined as the deviation point of the vehicle 602 from the road 601.

A feature is searched for that exists within a predetermined range 640 from a parking position 624 where the vehicle 602 is parked within the parking lot. If a feature 630 existing within the predetermined range 640 is retrieved, the deviation point (point 623) is recognized as an entrance point where the entrance 604 of the parking lot of the feature 630 is located. Since this enables more accurate detection of the deviation point where the vehicle 602 has deviated from the road 601, more accurate recognition can be performed for the entrance point where the entrance 604 of the parking lot of the feature 630 is located.

The traveling path information representing the traveling path 620 of the vehicle 602 may automatically be recorded for a predetermined time period (e.g., five minutes) on the recording medium such as the magnetic disc 405 and the optical disc 407 or a memory not shown. The automatically recorded traveling path information is recorded in a cyclic manner and information older than a given elapsed period of time may be erased.

Returning to the description of the flowchart of Fig. 5, the deviation point recognized at step S508 is then recorded as the entrance point of the parking lot of the feature into a memory, etc., not shown (step S509), and a sequence of the process of the flowchart is terminated.

If plural features are retrieved at step S506, the temporarily saved deviation point may be recorded as an entrance point of the parking lot of the feature closest to the parking position. Alternatively, the temporarily saved deviation point may be recorded as an entrance point for all the retrieved features.

As described above, if a vehicle on a road parks at a place away from the road, the navigation apparatus 400 can record a deviation point from the road as an entrance point of a parking lot of a feature existing in the vicinity of the parking position of the vehicle. When a route is retrieved for a destination that is a feature for which an entrance point to a parking lot has been recorded, a route to the entrance point of the parking lot of the feature can be retrieved.

Along with the entrance point of the parking lot of the feature, an entering method at the time of entry of the vehicle into the parking lot may also be recorded and correlated with the entrance point of the parking lot of the feature onto the recording medium such as the magnetic disc 405 and the optical disc 407 or a memory, etc., not shown. The entering method into the entrance of the parking lot of the feature is information indicating how the vehicle enters the entrance of the parking lot of the feature from a road and may be information indicating that the vehicle can turn right, turn left, or go straight to enter the entrance of the parking lot from a road, for example.

The entering method may be determined with the use of the position information indicative of the current position of the vehicle identified at step S503, the values output from the various sensors 416, and the map information, for example. Specifically, position information indicative of the current position of the vehicle, the traveling direction of the vehicle, and the road shape data of the road of the traveling vehicle are utilized to determine, for example, that the vehicle turns right to enter into the entrance of the parking lot of the feature on the opposite side of the road. Steering operations, etc., performed by a driver may be detected to determine what degree of angle is formed relative to the direction of the road when entering the entrance of the parking lot of the feature.

If a type of the parking lot is determined with the use of the position information indicative of the current position of the vehicle identified at step S503, the values output from the various sensors 416, the map information, etc., the type of the parking lot may be correlated with the parking lot of the feature and recorded.

The type of the parking lot may be information indicating an outdoor parking lot, a multilevel parking lot, and an underground parking lot. When determining the type of the parking lot, for example, if the sensitivity does not change in the signals received from the GPS satellites by the GPS receiver, the parking lot is determined as an outdoor parking lot. For example, if the signals cannot be received from the GPS satellites located in a vertical direction or if it is detected that the mobile object ascends up a slope, the parking lot is determined as a multilevel parking lot. For example, if the reception sensitivity of the signals is determined to be low, less than or equal to a threshold value, or if it is detected that the mobile object descends down a slope, the parking lot is determined as an underground parking lot. The number of turns made by the vehicle within the parking lot may be measured by the various sensors 416 to determine the number of levels of the parking lot.

As described above, various pieces of information recorded and correlated with the feature in the recording medium may be displayed, on the display 413, along with the parking lot information of the feature and presented to a driver when the driver retrieves the feature as a destination, for example.

When a feature for which an entrance point to a parking lot has been recorded is set as a destination, a route to the entrance point of the parking lot of the feature can be retrieved. If the entering method for the entrance of the parking lot of the feature is also recorded, a route taking into account the entering method can be retrieved. For example, if the recorded entering method indicates that the vehicle can turn left to enter the entrance of the parking lot, a route is retrieved that enables the vehicle to turn left and enter the entrance of the parking lot.

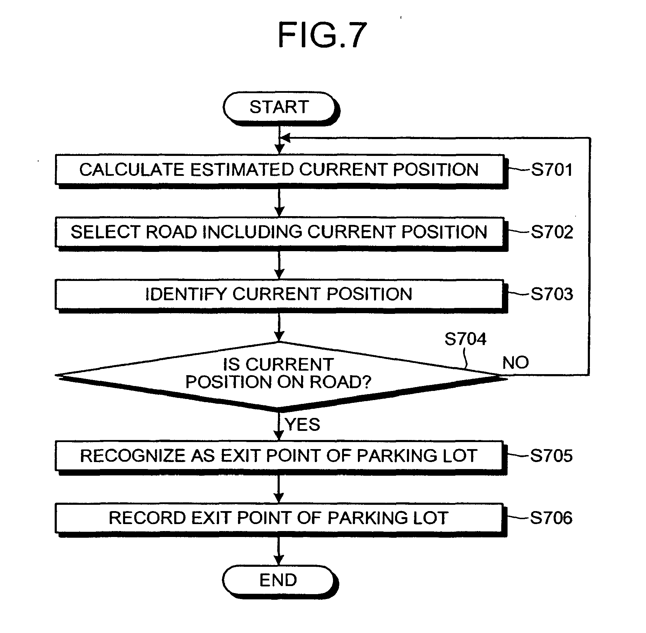

Another example of a position recording process procedure of the navigation apparatus 400 according to the example of the present invention is described. Fig. 7 is a flowchart of another example of the position recording process procedure of the navigation apparatus according to the example of the present invention. Details of the process described in the flowchart of Fig. 7 are descriptions of a process when the vehicle returns on a road again after the entrance point of the parking lot of the feature is recorded on the recording medium such as the magnetic disc 405 and the optical disc 407 or the memory not shown at step S509 of the flowchart of Fig. 5.

As shown in the flowchart of Fig. 7, details of the process executed by the navigation apparatus 400 at steps S701 to S704 are identical to the details of the process from steps S501 to S504 described for the flowchart of Fig. 5 and, therefore, description thereof is omitted and description herein begins from the process of step S705.

If it is determined at step S704 that the current position of the vehicle is on a road (step S704: YES), a returning point of the vehicle onto the road from outside the road is recognized as an exit point from the parking lot of the feature (step S705). The returning point is the first current position of the vehicle identified to be on a road. The returning point, similarly to the deviation point as described above, may be temporarily saved.

When the returning point of the vehicle onto the road from outside the road is detected, the returning point may be detected with the use of traveling path information acquired by recording a traveling path of the vehicle. For example, if it is determined that the current position of the vehicle is on a road, a traveling path of the vehicle before the determination may be traced back to detect the returning point of the vehicle to the road from outside the road. A specific example of detecting the returning point is briefly described here.

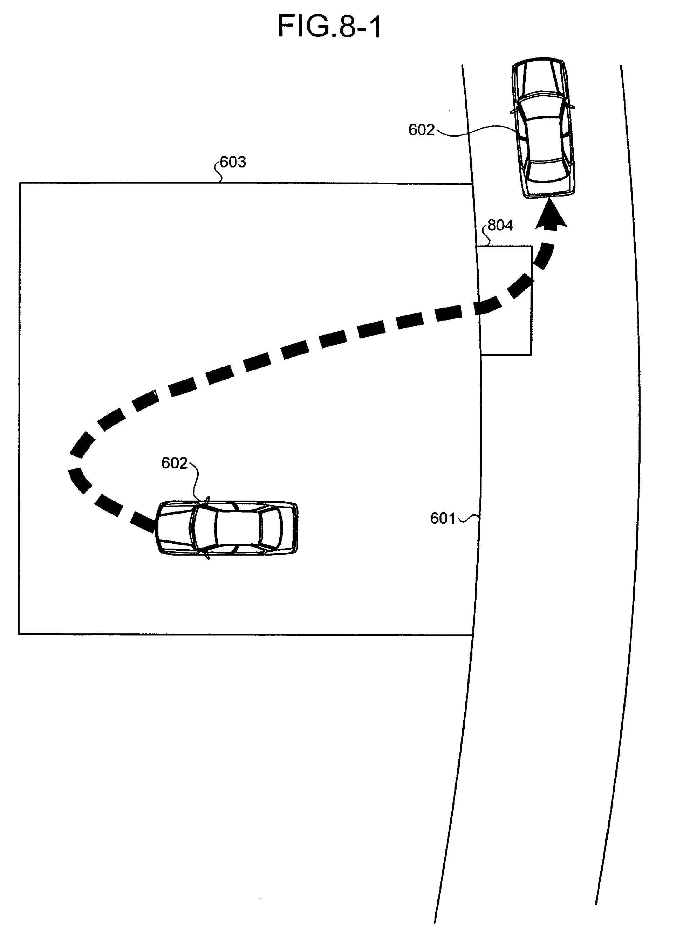

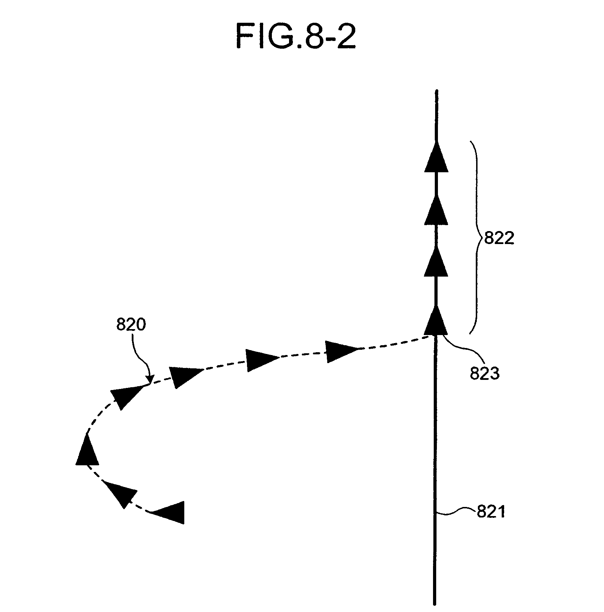

Fig. 8-1 is a view of an example of a case when a vehicle exits from a parking lot of the feature onto a road. Fig. 8-2 is an explanatory view for explaining a process when the returning point is detected. As shown in Fig. 8-1, the vehicle 602 exits from an exit of the parking lot of the feature and returns onto the road 601 to start traveling again in this case.

A traveling path 820 of the vehicle 602 shown in Fig. 8-2 represents a traveling path of the vehicle until the vehicle 602 exits the parking lot 603 of the feature and returns onto the road 601. Points indicated on the traveling path 820 indicate the current positions of the vehicle 602 at respective times, e.g., predetermined time intervals.

The returning point of the vehicle 602 onto the road 601 is detected from among the current positions of the vehicle 602 indicated on the traveling path 820. Specifically, for example, based on the position information concerning the points indicated on the traveling path 820 and a road link 821 of the road 601 included in the road shape data, and from among road points 822 indicative of current positions on the road 601, a point 823 identified as the first current position of the mobile object is calculated, and this point 823 is the returning point of the vehicle 602 onto the road 601.

The detected returning point (point 823) is recognized as an exit point where the exit 804 of the parking lot of the feature is located. Since this enables more accurate detection of the returning point of the vehicle 602 exiting from the parking lot of the feature to return onto the road 601, more accurate recognition can be achieved for the exit position where the exit 804 of the parking lot of the feature is located.

The traveling path information representing the traveling path 820 of the vehicle 602 may be recorded automatically for a predetermined time period (e.g., five minutes) on the recording medium such as the magnetic disc 405 and the optical disc 407 or a memory not shown. The automatically recorded traveling path information is recorded in a cyclic manner and information older than a given elapsed period of time may be erased.

Returning to the description of the flowchart of Fig. 7, after the returning point of the vehicle that has returned onto the road from outside the road is recognized as the exit point of the parking lot of the feature at step S705, the recognized exit point of the parking lot of the feature is recorded onto the recording medium such as the magnetic disc 405 and the optical disc 407 or a memory, etc., not shown (step S706), and a sequence of the process of the flowchart is terminated. If it is determined that the current position of the vehicle is not on the road at step S704 (step S704: NO), the process returns to step S701 to repeat a sequence of the process of the flowchart.

Along with the exit point of the parking lot of the feature, an exiting method at the time of exiting of the vehicle from the parking lot of the feature also may be correlated with the exit point of the parking lot of the feature and recorded onto the recording medium, such as the magnetic disc 405 and the optical disc 407 or a memory, etc., not shown. The exiting method from the exit of the parking lot is information indicative of how the vehicle exits from the exit of the parking lot onto a road and may be information indicating that the vehicle can turn right, turn left, or go straight to exit from the exit of the parking lot onto a road, for example.

The exiting method may be determined with the use of the position information indicative of the current position of the vehicle identified at step S703, the values output from the various sensors 416, the map information, etc. Specifically, position information indicative of the current position of the vehicle, the traveling direction of the vehicle, and the road shape data of the road of the traveling vehicle are utilized to determine whether the vehicle turns right to return on the road or turns left to return on the road, for example.

If the entrance point of the parking lot of the feature recognized at step S508 of the flowchart of Fig. 5 is determined as substantially the same position as the exit point of the parking lot of the feature recognized at step S705 of the flowchart of Fig. 7, the entrance point and the exit point of the parking lot may be recognized as an entrance/exit point of the parking lot of the feature. This enables more accurate recognition of the entrance/exit of the parking lot of the feature.

When a route to an arbitrary destination is searched for from inside a parking lot of a feature (place other than a road and within a predetermined range from the feature) for which an exit point of a parking lot has been recorded, a route taking into account the exit point of the parking lot of the feature can be retrieved. If the exiting method is also recorded and correlated with the exit point of the parking lot of the feature, a route taking into account the exiting method can be retrieved. For example, if the recorded exiting method indicates that the vehicle can turn left from the exit of the parking lot of the feature to return onto the road, a route having a left turn to exit the parking lot of the feature is retrieved.

As described above, according to this example, if the current position of the vehicle identified to be on a road is then identified to be at a place other than a road and it is determined that the vehicle is parked at a place other than a road, the navigation apparatus 400 can automatically record the deviation point from the road as an entrance point of a parking lot of a feature existing in the vicinity of the parking position of the vehicle.

If the current position of the vehicle identified to be within the parking lot of the feature is then identified to be on a road, the navigation apparatus 400 can automatically record, as an exit point of the parking lot of the feature, the returning point of the vehicle that has returned onto the road.

A user can arbitrarily set a predetermined range used when searching for a feature existing in the vicinity of the parking position of the vehicle depending on the type of feature. Therefore, a feature at a suitable distance from the parking position can be retrieved depending on the type of feature, and a deviation point of the vehicle that has deviated from a road can be recorded and correlated with a correct feature.

When a route is searched for a destination that is a feature for which an entrance point to a parking lot has been recorded, the navigation apparatus 400 can retrieve a route to the entrance point of the parking lot of the feature. Since this enables a user to check the entrance point of the parking lot when the user arrives at the parking lot of the feature along the retrieved route, the user can easily enter the parking lot of the feature.

When a route to an arbitrary destination is searched for from inside a parking lot of a feature for which an exit point of a parking lot has been recorded, the navigation apparatus 400 can retrieve a route taking into account the exit point of the parking lot. Therefore, a user can know the traveling direction of the vehicle in advance when exiting the parking lot of the feature.

The navigation apparatus 400 can record and correlate the entering method to the entrance of the parking lot, the exiting method from the exit of the parking lot, and the type of the parking lot with the entrance point and the exit point of the parking lot of the feature. Therefore, for example, when a route to the parking lot of the feature is searched for, a route taking into account the entering method into the entrance of the parking lot can be retrieved. When a route from the parking lot of the feature to an arbitrary destination is searched for, a route taking into account the exiting method from the exit of the parking lot can be retrieved.

As described above, the navigation apparatus 400 can automatically record, according to the utilization environment of a user, various pieces of information such as an entrance point and an exit point, not preliminarily recorded as map information, of a parking lot of a feature and can utilize the information when a user conducts route retrieval, etc. Therefore, the user can obtain the optimal retrieval suitable for the utilization environment, and convenience for the user can be improved.

The position registering method explained in the present embodiment can be implemented by a computer, such as a personal computer and a workstation, executing a program that is prepared in advance. The program is recorded on a computer-readable recording medium such as a hard disk, a flexible disk, a CD-ROM, an MO, and a DVD, and is executed by being read out from the recording medium by a computer. The program can be a transmission medium that can be distributed through a network such as the Internet.

## Claims

1. A position registering apparatus comprising:
an acquiring unit (101) adapted to acquire traveling state information indicative of a traveling state of a mobile object;
a position identifying unit (102) adapted to identify a position of the mobile object based on the traveling state information and map information;
a saving unit (103) adapted to temporarily save a deviation point from a road when the position of the mobile object identified to be on a road is then identified to be at a place other than a road;
a parking determining unit (104) adapted to determine, while the position of the mobile object is identified to be at the place other than a road, whether the mobile object is parked,
a retrieving unit (105) adapted to retrieve a feature existing in a vicinity of a parking position when it is determined that the mobile object is parked, the parking position being a position where the mobile object is parked; and
a registering unit (106) adapted to, when the feature existing in the vicinity of the parking position is retrieved after the position of the mobile object is identified to be at the place other than a road, register into a storage unit, the deviation point as an entrance point of a parking lot of the feature.

2. The position registering apparatus according to claim 1, wherein the retrieving unit (105) is adapted to retrieve a feature that is of a given category and existing in the vicinity of the parking position.

3. The position registering apparatus according to claim 2, wherein the retrieving unit (105) is adapted to retrieve a feature that is of a first category and existing within a first predetermined range from the parking position, and
the retrieving unit (105), when a feature of the first category cannot be retrieved, is adapted to retrieve a feature that is of a second category and existing within a second predetermined range that is larger than the first predetermined range.

4. The position registering apparatus according to claim 1, wherein the registering unit (106), when a plurality of features is retrieved by the retrieving unit (105), is adapted to register into the storage unit, the deviation point as an entrance point of the parking lot of the feature closest to the parking position.

5. The position registering apparatus according to claim 1, wherein the registering unit (106), when the position of the mobile object identified to be at the place other than a road is then identified to be on a road by the position identifying unit (102) after the entrance point of the parking lot of the feature has been registered, is adapted to register into the storage unit, a returning point onto a road as an exit point of the parking lot of the feature.

6. A route retrieving apparatus comprising:
the position registering apparatus according to any one of claims 1 to 5;
a destination setting unit (301) adapted to set a destination; and
a route retrieving unit that (302), when a feature for which an entrance point of a parking lot has been stored in the storage unit is set as the destination, is adapted to retrieve a route to the entrance point.

7. A route retrieving apparatus comprising:
the position registering apparatus according to claim 5;
a destination setting unit (301) adapted to set a destination; and
a route retrieving unit (302) adapted to retrieve a route to the destination, wherein
the route retrieving unit (302), when the position of the mobile object is identified to be at a place other than a road within a predetermined range of a feature for which an exit point is registered and a destination is set, is adapted to retrieve a route from the exit point to the destination.

8. A position registering method comprising:
an acquiring step (S201) of acquiring traveling state information indicative of a traveling state of a mobile object;
a position identifying step (S202) of identifying a position of the mobile object based on the traveling state information and map information;
a saving step (S203) of temporarily saving a deviation point from a road when the position of the mobile object identified to be on a road is then identified to be at a place other than a road;
a parking determining step (S204) of determining, while the position of the mobile object is identified to be at the place other than a road whether the mobile object is parked;
a retrieving step (S205) of retrieving a feature existing in a vicinity of a parking position when it is determined that the mobile object is parked, the parking position being a position where the mobile object is parked; and
a registering step (S206) of registering into a storage unit, when the feature existing in the vicinity of the parking position is retrieved, the deviation point as an entrance point of a parking lot of the feature.

9. A position-registering computer program causing a computer to execute the position registering method according to claim 8.

10. A computer-readable recording medium storing therein the position-registering computer program according to claim 9.

## Patentansprüche

1. Positionseintragungsvorrichtung, die Folgendes umfasst:
eine Erfassungseinheit (101), die dafür eingerichtet ist, Fahrtzustandsinformationen zu erfassen, die einen Fahrtzustand eines beweglichen Objekts anzeigen,
eine Positionsidentifizierungseinheit (102), die dafür eingerichtet ist, auf der Grundlage der Fahrtzustandsinformationen und von Karteninformationen eine Position des beweglichen Objekts zu identifizieren,
eine Speicherungseinheit (103), die dafür eingerichtet ist, zeitweilig einen Abweichungspunkt von einer Straße zu speichern, wenn die als an einer Straße befindlich identifizierte Position des beweglichen Objekts dann als an einem anderen Platz als einer Straße befindlich identifiziert wird,
eine Parkfeststellungseinheit (104), die dafür eingerichtet ist, während die Position des beweglichen Objekts als an dem anderen Platz als einer Straße befindlich identifiziert wird, festzustellen, ob das bewegliche Objekt geparkt ist,
eine Abrufeinheit (105), die dafür eingerichtet ist, ein in einer Nachbarschaft einer Parkposition vorhandenes Merkmal abzurufen, wenn festgestellt wird, dass das bewegliche Objekt geparkt ist, wobei die Parkposition eine Position ist, wo das mobile Objekt geparkt ist, und
eine Eintragungseinheit (106), die dafür eingerichtet ist, wenn das in der Nachbarschaft der Parkposition vorhandene Merkmal abgerufen wird, nachdem die Position des beweglichen Objekts als an dem anderen Platz als einer Straße befindlich identifiziert wird, den Abweichungspunkt als einen Einfahrtpunkt einer Parkfläche des Merkmals in eine Speicherungseinheit einzutragen.

2. Positionseintragungsvorrichtung nach Anspruch 1, wobei die Abrufeinheit (105) dafür eingerichtet ist, ein Merkmal abzurufen, das eine gegebene Kategorie hat und in der Nachbarschaft der Parkposition vorhanden ist.

3. Positionseintragungsvorrichtung nach Anspruch 2, wobei die Abrufeinheit (105) dafür eingerichtet ist, ein Merkmal abzurufen, das eine erste Kategorie hat und innerhalb einer ersten vorbestimmten Entfernung von der Parkposition vorhanden ist, und
die Abrufeinheit (105) dafür eingerichtet ist, wenn ein Merkmal der ersten Kategorie nicht abgerufen werden kann, ein Merkmal abzurufen, das eine zweite Kategorie hat und innerhalb einer zweiten vorbestimmten Entfernung, die größer ist als die erste vorbestimmte Entfernung, vorhanden ist.

4. Positionseintragungsvorrichtung nach Anspruch 1, wobei die Eintragungseinheit (106) dafür eingerichtet ist, wenn durch die Abrufeinheit (105) mehrere Merkmale abgerufen werden, den Abweichungspunkt als einen Einfahrtpunkt der Parkfläche des der Parkposition nächsten Merkmals in die Speicherungseinheit einzutragen.

5. Positionseintragungsvorrichtung nach Anspruch 1, wobei die Eintragungseinheit (106) dafür eingerichtet ist, wenn die als an dem anderen Platz als einer Straße befindlich identifizierte Position des beweglichen Objekts dann durch die Positionsidentifizierungseinheit (102) als auf einer Straße befindlich identifiziert wird, nachdem der Einfahrtpunkt der Parkfläche des Merkmals eingetragen worden ist, einen Rückkehrpunkt auf eine Straße als einen Ausfahrtpunkt der Parkfläche des Merkmals in die Speicherungseinheit einzutragen.

6. Routenabrufvorrichtung, die Folgendes umfasst:
die Positionseintragungsvorrichtung nach einem der Ansprüche 1 bis 5,
eine Zieleinstellungseinheit (301), die dafür eingerichtet ist, ein Ziel einzustellen, und
eine Routenabrufeinheit (302), die dafür eingerichtet ist, wenn ein Merkmal, für das ein Einfahrtpunkt einer Parkfläche in der Speicherungseinheit gespeichert worden ist, als das Ziel eingestellt wird, eine Route zu dem Einfahrtpunkt abzurufen.

7. Routenabrufvorrichtung, die Folgendes umfasst:
die Positionseintragungsvorrichtung nach Anspruch 5,
eine Zieleinstellungseinheit (301), die dafür eingerichtet ist, ein Ziel einzustellen, und
eine Routenabrufeinheit (302), die dafür eingerichtet ist, eine Route zu dem Ziel abzurufen, wobei
die Routenabrufeinheit (302) dafür eingerichtet ist, wenn die Position des beweglichen Objekts als an einem anderen Platz als einer Straße innerhalb einer vorbestimmten Entfernung von einem Merkmal befindlich identifiziert wird, für das ein Ausfahrtpunkt eingetragen ist und ein Ziel eingestellt ist, eine Route von dem Ausfahrtpunkt zu dem Ziel abzurufen.

8. Positionseintragungsverfahren, das Folgendes umfasst:
einen Erfassungsschritt (S201), um Fahrtzustandsinformationen zu erfassen, die einen Fahrtzustand eines beweglichen Objekts anzeigen,
einen Positionsidentifizierungsschritt (S202), um auf der Grundlage der Fahrtzustandsinformationen und von Karteninformationen eine Position des beweglichen Objekts zu identifizieren,
einen Speicherungsschritt (S203), um zeitweilig einen Abweichungspunkt von einer Straße zu speichern, wenn die als an einer Straße befindlich identifizierte Position des beweglichen Objekts dann als an einem anderen Platz als einer Straße befindlich identifiziert wird,
einen Parkfeststellungsschritt (S204), um, während die Position des beweglichen Objekts als an dem anderen Platz als einer Straße befindlich identifiziert wird, festzustellen, ob das bewegliche Objekt geparkt ist,
einen Abrufschritt (S205), um ein in einer Nachbarschaft einer Parkposition vorhandenes Merkmal abzurufen, wenn festgestellt wird, dass das bewegliche Objekt geparkt ist, wobei die Parkposition eine Position ist, wo das mobile Objekt geparkt ist, und
einen Eintragungsschritt (S206), um, wenn das in der Nachbarschaft der Parkposition vorhandene Merkmal abgerufen wird, den Abweichungspunkt als einen Einfahrtpunkt einer Parkfläche des Merkmals in eine Speicherungseinheit einzutragen.

9. Positionseintragungsrechnerprogramm, das veranlasst, dass ein Rechner das Positionseintragungsverfahren nach Anspruch 8 ausführt.

10. Rechnerlesbares Aufzeichnungsmedium, das in demselben das Positionseintragungsrechnerprogramm nach Anspruch 9 speichert.

## Revendications

1. Appareil d'enregistrement de position comprenant :
une unité d'acquisition (101) adaptée pour acquérir des informations d'état de déplacement indiquant un état de déplacement d'un objet mobile ;
une unité d'identification de position (102) adaptée pour identifier une position de l'objet mobile en se basant sur les informations d'état de déplacement et des informations cartographiques ;
une unité de sauvegarde (103) adaptée pour sauvegarder temporairement un point de déviation depuis une route lorsque la position de l'objet mobile identifiée comme étant sur une route est ensuite identifiée comme étant à un endroit autre qu'une route ;
une unité de détermination de stationnement (104) adaptée pour déterminer, pendant que la position de l'objet mobile est identifiée comme étant à l'endroit autre qu'une route, si l'objet mobile est stationné,
une unité de récupération (105) adaptée pour récupérer une caractéristique existant au voisinage d'une position de stationnement lorsqu'il est déterminé que l'objet mobile est stationné, la position de stationnement étant une position où l'objet mobile est stationné ;
une unité d'enregistrement (106) adaptée, lorsque la caractéristique existant au voisinage de la position de stationnement est récupérée après que la position de l'objet mobile est identifiée comme étant à l'endroit autre qu'une route, pour enregistrer dans une unité de stockage, le point de déviation en tant que point d'entrée d'un parc de stationnement de la caractéristique.

2. Appareil d'enregistrement de position selon la revendication 1, dans lequel l'unité de récupération (105) est adaptée pour récupérer une caractéristique qui est d'une catégorie donnée et existant au voisinage de la position de stationnement.

3. Appareil d'enregistrement de position selon la revendication 2, dans lequel l'unité de récupération (105) est adaptée pour récupérer une caractéristique qui est d'une première catégorie et existant dans une première plage prédéterminée à partir de la position de stationnement, et
l'unité de récupération (105), lorsqu'une caractéristique de la première catégorie ne peut pas être récupérée, est adaptée pour récupérer une caractéristique qui est d'une seconde catégorie et existant dans une seconde plage prédéterminée qui est plus grande que la première plage prédéterminée.

4. Appareil d'enregistrement de position selon la revendication 1, dans lequel l'unité d'enregistrement (106), lorsqu'une pluralité de caractéristiques est récupérée par l'unité de récupération (105), est adaptée pour enregistrer dans l'unité de stockage, le point de déviation en tant que point d'entrée du parc de stationnement de la caractéristique la plus proche de la position de stationnement.

5. Appareil d'enregistrement de position selon la revendication 1, dans lequel l'unité d'enregistrement (106), lorsque la position de l'objet mobile identifiée comme étant à l'endroit autre qu'une route est ensuite identifiée comme étant sur une route par l'unité d'identification de position (102) après que le point d'entrée du parc de stationnement de la caractéristique a été enregistré, est adaptée pour enregistrer dans l'unité de stockage, un point de retour sur une route en tant que point de sortie du parc de stationnement de la caractéristique.

6. Appareil de récupération d'itinéraire comprenant :
l'appareil d'enregistrement de position selon l'une quelconque des revendications 1 à 5;
une unité de réglage de destination (301) adaptée pour régler une destination ; et
une unité de récupération d'itinéraire (302) qui, lorsqu'une caractéristique pour laquelle un point d'entrée d'un parc de stationnement a été stocké dans l'unité de stockage est réglée comme la destination, est adaptée pour récupérer un itinéraire vers le point d'entrée.

7. Appareil de récupération d'itinéraire comprenant :
l'appareil d'enregistrement de position selon la revendication 5 ;
une unité de réglage de destination (301) adaptée pour régler une destination ; et
une unité de récupération d'itinéraire (302) adaptée pour récupérer un Itinéraire vers la destination, dans lequel
l'unité de récupération d'itinéraire (302), lorsque la position de l'objet mobile est identifiée comme étant à un endroit autre qu'une route dans une plage prédéterminée d'une caractéristique pour laquelle un point de sortie est enregistré et une destination est réglée, est adaptée pour récupérer une route du point de sortie vers la destination.

8. Procédé d'enregistrement de position comprenant :
une étape d'acquisition (S201) consistant à acquérir des informations d'état de déplacement indiquant un état de déplacement d'un objet mobile ;
une étape d'identification de position (S202) consistant à identifier une position de l'objet mobile en se basant sur les informations d'état de déplacement et des informations cartographiques ;
une étape de sauvegarde (S203) consistant à sauvegarder temporairement un point de déviation depuis une route lorsque la position de l'objet mobile identifiée comme étant sur une route est ensuite identifiée comme étant à un endroit autre qu'une route ;
une étape de détermination de stationnement (S204) consistant à déterminer, pendant que la position de l'objet mobile est identifiée comme étant à l'endroit autre qu'une route, si l'objet mobile est stationné ;
une étape de récupération (S205) consistant à récupérer une caractéristique existant au voisinage d'une position de stationnement lorsqu'il est déterminé que l'objet mobile est stationné, la position de stationnement étant une position où l'objet mobile est stationné ; et
une étape d'enregistrement (S206) consistant à enregistrer dans une unité de stockage, lorsque la caractéristique existant au voisinage de la position de stationnement est récupérée, le point de déviation en tant que point d'entrée d'un parc de stationnement de la caractéristique.

9. Programme informatique d'enregistrement de position amenant un ordinateur à exécuter le procédé d'enregistrement de position selon la revendication 8.

10. Support d'enregistrement lisible par ordinateur stockant à l'intérieur le programme informatique d'enregistrement de position selon la revendication 9.
